# FASCICULE DE BREVET EUROPEEN

(11) **EP 1 013 161 B1**
(45) Date de publication et mention de la délivrance du brevet: **26.05.2004**
(21) Numéro de dépôt: 99440347.5
(22) Date de dépôt: 07.12.1999
(51) Int. Cl.: A01D 78/10

(54) **Machine de fenaison**
Heuwerbungsmaschine
Haymaking machine

(30) Priorité: 18.12.1998 FR 9816171
(43) Date de publication de la demande: 28.06.2000
(73) Titulaire: KUHN S.A., 67706 Saverne Cedex (FR)
(72) Inventeur: Quirin, Michel, 67310 Wasselonne (FR); Higel, Eric, 67117 Furdenheim (FR)
(74) Mandataire: Andres, Jean-Claude

(56) Documents cités:
- EP-A- 0 677 241
- EP-A- 0 733 302
- EP-A- 0 806 133
- DE-A- 4 128 585
- DE-A- 4 331 311
- US-A- 4 922 699

## Description

La présente invention se rapporte à une machine de fenaison comportant une structure porteuse pouvant être reliée à un tracteur au moyen d'un dispositif d'accouplement constitué par un cadre qui est articulé par rapport à la structure porteuse au moyen d'un axe sensiblement vertical et qui possède deux attaches inférieures et une attache supérieure, laquelle structure se compose d'une poutre transversale et d'une poutre de liaison qui relie la poutre transversale au cadre du dispositif d'accouplement, ladite poutre transversale étant constituée d'un tronçon central et de tronçons latéraux qui sont articulés au tronçon central par des axes sensiblement horizontaux autour desquels ils sont déplaçables à l'aide de premiers vérins hydrauliques, lesquels tronçons portent des rotors de travail pouvant être entraînés en rotation autour d'axes supports dirigés vers le bas et portant à leurs extrémités inférieures des roues d'appui au sol qui sont orientables au moyen d'au moins un deuxième vérin hydraulique, lesdits premiers vérins hydrauliques et ledit deuxième vérin hydraulique étant reliés au circuit hydraulique du tracteur au moyen de tuyaux et commandés à l'aide de distributeurs hydrauliques avec des tiroirs réglables dans plusieurs positions.

Sur une machine de ce genre connue dans la demande de brevet EP-733 302, l'utilisateur doit actionner simultanément deux distributeurs hydrauliques lorsqu'il veut transposer la machine de la position de travail dans la position de transport et inversement ou lorsqu'il veut modifier l'orientation des roues d'appui de la structure porteuse durant le travail. En raison de ces opérations, il ne peut pratiquement plus assurer une conduite correcte du tracteur. Par conséquent, il existe un risque de fausse manoeuvre pouvant provoquer un accident.

La présente invention a pour but de proposer une machine telle que décrite dans l'introduction et qui ne présente pas les inconvénients sus-cités.

A cet effet, une importante caractéristique de l'invention consiste en ce qu'un distributeur hydraulique intermédiaire se situe sur un tuyau qui est relié à un distributeur hydraulique du tracteur, que ce distributeur hydraulique intermédiaire est monté sur un support et qu'il comporte une manette de commande de son tiroir qui est reliée par un moyen de liaison à une pièce du dispositif d'accouplement qui est mobile par rapport audit support de manière à ce que cette pièce mobile règle automatiquement ledit tiroir dans une position où l'huile arrive aux premiers vérins hydrauliques lorsque la structure porteuse est soulevée et dans une position où l'huile arrive au deuxième vérin hydraulique lorsque la structure porteuse repose sur le sol.

Dans ce cas, l'utilisateur n'a plus qu'à actionner un seul distributeur hydraulique lorsqu'il veut modifier la position de la machine.

La pièce mobile du dispositif d'accouplement peut être constituée par le cadre d'accrochage ou par l'attache supérieure qui est déplaçable par rapport au cadre. Cette pièce mobile se déplace par rapport à la structure porteuse lorsque la machine est soulevée ou abaissée au moyen du relevage du tracteur. Lors du soulèvement de la machine, elle place le tiroir du distributeur hydraulique intermédiaire dans la position ou l'huile arrive aux premiers vérins hydrauliques. L'utilisateur peur alors commander, en actionnant uniquement le distributeur hydraulique du tracteur, les premiers vérins hydrauliques de sorte qu'ils replient ou déplient les tronçons latéraux de la structure porteuse.

Lorsque la machine est abaissée et que les roues d'appui touchent le sol, la pièce mobile place le tiroir du distributeur hydraulique intermédiaire dans la position ou l'huile arrive au deuxième vérin hydraulique. L'actionnement du distributeur du tracteur permet alors à l'utilisateur de commander ledit deuxième vérin hydraulique afin qu'il modifie l'orientation des roues d'appui. Il peut ainsi faire passer la machine de la position de travail normale dans une position de travail en oblique ou vice versa.

D'autres caractéristiques et avantages de l'invention ressortiront des revendications et de la description ci-après d'un exemple de réalisation non limitatif de l'invention, avec références aux dessins annexés dans lesquels :
- la figure 1 représente une vue de côté d'une machine selon l'invention en position de travail,
- la figure 2 représente une vue arrière de la machine,
- la figure 3 représente une vue de dessus de la machine dans une première position de travail,
- la figure 4 représente une vue de dessus de la machine dans une deuxième position de travail,
- la figure 5 représente une vue de côté de la machine en position de transport,
- la figure 6 représente une vue arrière de la machine en position de transport,
- la figure 7 représente un schéma de l'agencement hydraulique de la machine.

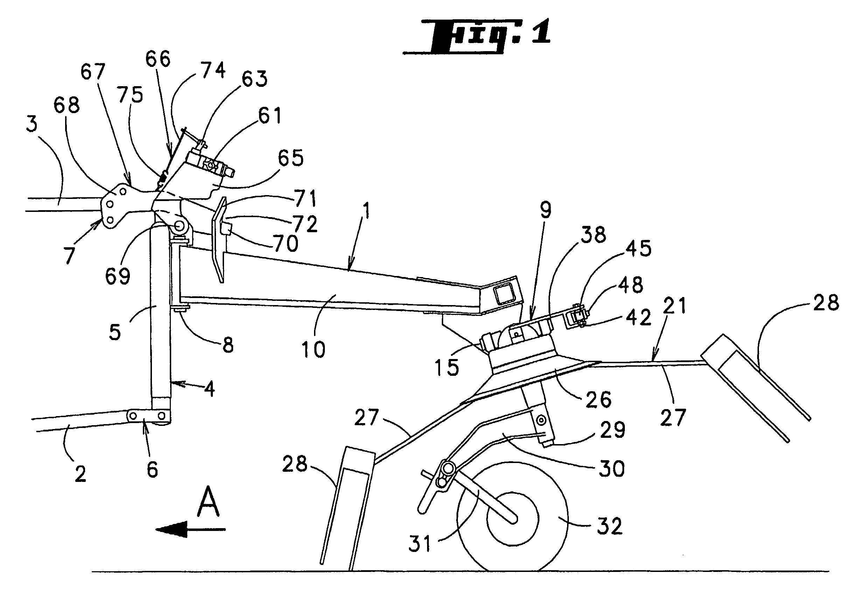

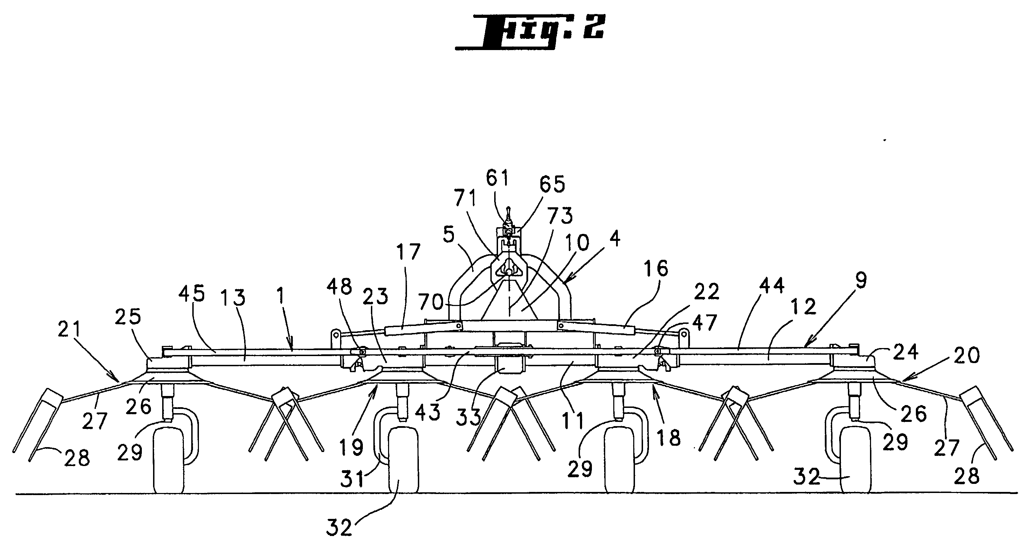

Telle qu'elle est représentée sur les figures 1 à 6, la machine selon l'invention comporte une structure porteuse (1). Celle-ci peut être reliée aux barres de relevage (2 et 3) d'un tracteur au moyen d'un dispositif d'accouplement (4). Ce dispositif est constitué par un cadre (5) avec deux attaches inférieures (6) et une attache supérieure (7). Ledit cadre (5) est articulé sur la structure porteuse (1) au moyen d'un axe sensiblement vertical (8) autour duquel il peut pivoter. La structure porteuse (1) se compose d'une poutre transversale (9) et d'une poutre de liaison (10) qui relie la poutre transversale (9) au cadre (5). Ladite poutre-transversale (9) est constituée d'un tronçon central (11) et de deux tronçons latéraux (12 et 13). Ces derniers sont articulés au tronçon central (11) par des axes sensiblement horizontaux (14 et 15).

Deux premiers vérins hydrauliques (16 et 17) à double effet sont articulés sur le tronçon central (11) et les tronçons latéraux (12 et 13). Ils permettent de déplacer ces tronçons latéraux (12 et 13) en hauteur autour de leurs axes d'articulation (14 et 15).

Dans l'exemple représenté, le tronçon central (11) porte deux rotors de travail (18 et 19) tandis que chaque tronçon latéral (12, 13) porte un rotor de travail (20, 21) à son extrémité la plus éloignée. Dans ce cas, la machine comporte quatre rotors de travail (18 à 21). Ce nombre peut cependant varier. Chaque tronçon latéral (12, 13) pourrait comporter plusieurs rotors de travail. Les rotors (18 à 21) se situent directement sous des carters (22 et 23) du tronçon central (11) et des carters (24 et 25) des tronçons latéraux (12 et 13). Ils sont tous sensiblement identiques. Chacun comporte un moyeu central (26) sur lequel sont fixés plusieurs bras (27) portant des fourches de travail (28) à leurs extrémités extérieures. Chaque moyeu (26) est monté de manière à pouvoir tourner sur un axe support (29) qui est logé dans un palier du carter (22 à 25) correspondant et qui s'étend vers le bas à partir de celui-ci. Chacun de ces axes supports (29) porte à son extrémité inférieure un bras (30) avec une colonne (31) munie d'une roue d'appui (32) qui roule sur le sol en position de travail.

Les rotors de travail (18 à 21) peuvent être entraînés en rotation autour des axes supports (29) à partir de l'arbre de prise de force du tracteur. A cet effet, chaque moyeu (26) comporte une couronne dentée avec laquelle engrène un pignon d'entraînement situé dans le carter (22 à 25) correspondant. Ces pignons d'entraînement sont montés sur des arbres de transmission qui sont logés dans les tronçons (11 à 13) de la poutre transversale (9). Ces arbres sont reliés entre eux au moyen d'accouplements du type à doigts ou à cardans situés au niveau des axes d'articulation (14 et 15). L'arbre de transmission qui est situé dans le tronçon central (11) passe dans un carter (33). Dans ce carter (33) il porte un pignon qui engrène avec un autre pignon solidaire d'un arbre (34) qui s'étend en direction du tracteur et qui peut être relié à l'arbre de prise de force de celui-ci au moyen d'un arbre de transmission intermédiaire.

Les axes supports (29) des rotors (18 à 21) sont montés pivotants dans les paliers de guidage prévus dans les carters (22 à 25) des tronçons (11, 12 et 13). Lesdits axes (29) traversent les parois supérieures de ces carters (22 à 25) et portent à leurs extrémités situées au-dessus de ces derniers des leviers de réglage (35 à 38) sensiblement horizontaux. Ces leviers (35 à 38) pourraient également sortir latéralement des carters (22 à 25). Ils sont tous reliés au moyen d'axes d'articulation (39 à 42) à des tiges de commande (43, 44, 45) qui sont parallèles aux tronçons (11, 12 et 13). La tige de commande (43) des axes supports (29) des rotors (18 et 19) du tronçon central (11) peut être déplacée longitudinalement à l'aide d'un deuxième vérin hydraulique (46) à double effet. Ce dernier est articulé sur ladite tige (43) et sur le tronçon central (11). Les tiges de commande (44 et 45) des axes supports (29) des rotors (20 et 21) des deux tronçons latéraux (12 et 13) sont articulés aux extrémités de la tige (43) au moyen d'axes (47 et 48) qui sont parallèles aux axes d'articulation (14 et 15) desdits tronçons (12 et 13).

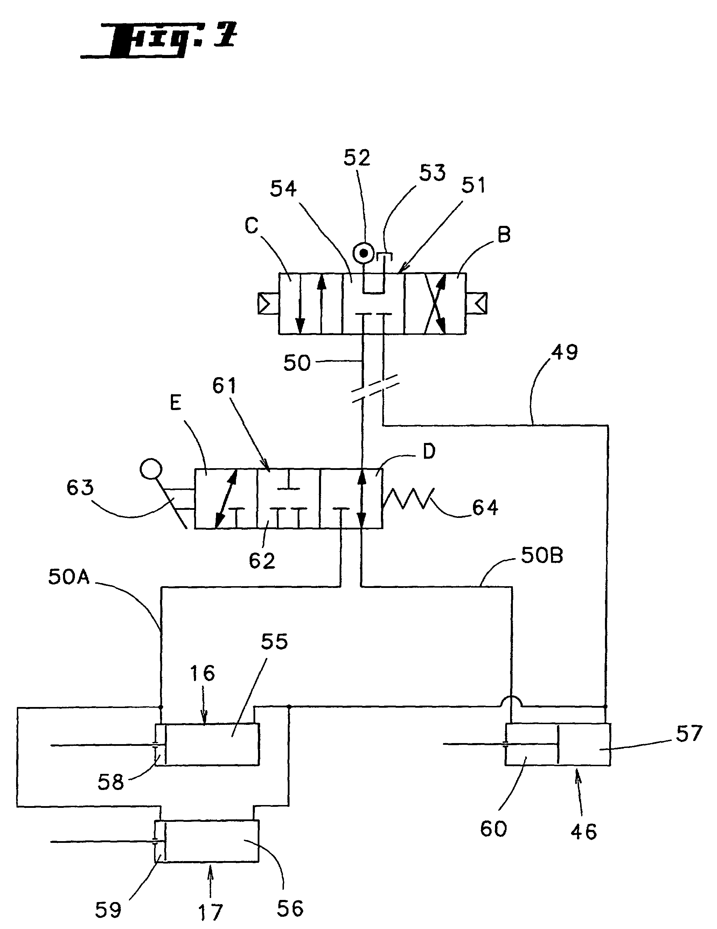

Comme cela ressort notamment de la figure 7, les premiers vérins hydrauliques (16 et 17) et le deuxième vérin hydraulique (46) sont reliés durant l'utilisation, au moyen de deux tuyaux (49 et 50), à un distributeur hydraulique (51) du tracteur. Ce distributeur (51) est par ailleurs raccordé, d'une manière connue en soi, à une pompe (52) et à un réservoir d'huile (53). Ledit distributeur possède un tiroir inverseur (54) déplaçable dans plusieurs positions. Il comporte une position (B) permettant d'envoyer de l'huile en direction des premières chambres (55, 56 ou 57) des vérins hydrauliques (16, 17 ou 46) par le premier tuyau (49), un retour à partir de leurs deuxièmes chambres (58, 59 ou 60) s'effectuant alors par le deuxième tuyau (50), ainsi qu'une position (C) qui permet d'envoyer de l'huile vers les deuxièmes chambres (58, 59 ou 60) desdits vérins hydrauliques (16, 17 ou 46) par le deuxième tuyau (50), un retour à partir des premières chambres (55, 56 ou 57) s'effectuant alors par le premier tuyau (49).

Le premier tuyau (49) relie directement ledit distributeur (51) aux premières chambres (55, 56 et 57) des premiers vérins hydrauliques (16 et 17) et du deuxième vérin hydraulique (46). Le deuxième tuyau (50) s'étend du distributeur (51) du tracteur jusqu'à un distributeur intermédiaire (61) prévu sur la machine. A partir de ce distributeur intermédiaire (61) un tuyau (50A) conduit aux deuxièmes chambres (58 et 59) des premiers vérins hydrauliques (16 et 17) et un tuyau (50B) conduit à la deuxième chambre (60) du deuxième vérin hydraulique (46). Ce distributeur intermédiaire (61) comporte un tiroir inverseur (62) déplaçable dans plusieurs positions. Dans une première position (D) le passage vers le tuyau (50B) qui est relié au deuxième vérin hydraulique (46) est ouvert tandis qu'il est fermé vers le tuyau (50A). Inversement, dans une deuxième position (E) le passage vers le tuyau (50A) et les premiers vérins hydrauliques (16 et 17) est ouvert tandis que le passage vers le tuyau (50B) est fermé.

Le tiroir (62) du distributeur intermédiaire (61) est lié à une manette de commande (63). Il est en sus relié à un ressort (64). Celui-ci le place automatiquement dans la position où le passage vers le tuyau (50B) du deuxième vérin hydraulique (46) est ouvert, lorsque la manette de commande (63) est relâchée.

Le distributeur hydraulique intermédiaire (61) est fixé sur un support (65) en forme de U renversé. Ce support (65) est rendu solidaire du cadre (5). Il pourrait cependant aussi être solidaire d'une autre pièce de la machine, comme par exemple la poutre de liaison (10). La manette de commande (63) du tiroir (62) est reliée par un moyen de liaison (66) à une pièce (67) du dispositif d'accouplement (4) qui est mobile par rapport audit support (65), de manière à ce que cette pièce mobile (67) règle automatiquement la position dudit tiroir (62). Dans l'exemple représenté, la manette de commande (63) du tiroir (62) est reliée à l'attache supérieure (7) qui constitue la pièce mobile (67). Cette attache supérieure (7) est formée par une chape (68) qui est articulée sur le cadre (5) au moyen d'un axe sensiblement horizontal (69). Cet axe (69) se situe au-dessus de l'axe d'articulation (8) entre la poutre de liaison (10) et le cadre (5). Ladite chape (68) pivote autour de son axe d'articulation (69) lorsque la machine est soulevée ou abaissée avec les barres de relevage (2 et 3) du tracteur. En raison de ces pivotements, elle provoque le déplacement du tiroir (62) de telle sorte que la position (E) fasse communiquer le tuyau (50) avec le tuyau (50A) lorsque la machine est soulevée et que la position (D) fasse communiquer le tuyau (50) avec le tuyau (50B) lorsque la machine repose sur le sol.

La chape (68) possède une extrémité arrière (70) qui se situe dans une pièce de guidage (71) solidaire de la poutre de liaison (10). Cette pièce de guidage (71) possède une ouverture (72) de forme triangulaire dans laquelle se déplace ladite extrémité arrière (70). Le côté inférieur de cette ouverture (72) est sensiblement horizontal tandis que les deux autres côtés sont inclinés vers le haut et se rejoignent en un point situé sensiblement sur un axe de symétrie (73) de la machine.

La pièce mobile (67) pourrait également être reconstituée par le cadre (5) lui-même. Dans ce cas, ce cadre (5) pourrait être relié à la poutre de liaison (10) par une articulation du type à rotule, lui permettant de se déplacer dans un plan horizontal et dans un plan vertical.

Le moyen de liaison (66) est constitué par une tige (74) et un ressort de traction (75) qui relient la manette de commande (63) à la pièce mobile (67). Ledit ressort (75) confère une certaine souplesse à la commande du tiroir (62) ce qui évite des déplacements trop brutaux de celui-ci.

La machine décrite ci-dessus est destinée au fanage. Durant le travail elle est accouplée aux barres de relevage (2 et 3) d'un tracteur qui permet de la déplacer dans la direction (A) et de l'animer. Les tuyaux hydrauliques (49 et 50) sont reliés au distributeur (51) du tracteur. La machine est abaissée et les tronçons latéraux (12 et 13) de la poutre transversale (9) sont dépliés. Toutes les roues d'appui (32) des rotors (18 à 21) roulent alors sur le sol. Comme cela ressort notamment de la figure 1, la chape d'attelage (68) est poussée vers le haut par la barre supérieure (3) du tracteur. Son extrémité arrière (70) se situe dans la partie inférieure de l'ouverture (72) de la pièce de guidage (71). De plus, cette chape (68) n'exerce pas de traction sur la manette de commande (63) du tiroir (62) du distributeur intermédiaire (61). Ce tiroir (62) est alors placé dans la position qui est représentée sur la figure 7 et dans laquelle la position (D) fait communiquer le tuyau (50B) avec le tuyau (50) du distributeur (51) du tracteur. Les rotors (18 à 21) sont entraînés en rotation, autour de leurs axes supports (29) respectifs, de telle sorte qu'ils tournent deux à deux en convergence à l'avant (Flèches F et F'). Lors de cette rotation, leurs fourches (28) ramassent sur la partie avant de leur trajectoire les végétaux qui se trouvent sur le sol, les entraînent vers l'arrière et les étalent à nouveau tout en provoquant leur retournement. Les différents rotors (18 à 21) peuvent suivre les dénivellations du sol en pivotant avec les tronçons correspondant (11 à 13) de la poutre transversale (9), autour des axes d'articulation (14 et 15). L'ensemble de la structure porteuse (1) peut aussi pivoter autour de l'axe d'articulation (8) avec le cadre (5) afin que les rotors (18 à 21) puissent bien suivre le tracteur. Ce pivotement est toutefois limité latéralement par la pièce de guidage (71), lorsque les côtés de l'ouverture (72) butent contre l'extrémité arrière (70) de la chape d'attelage (68).

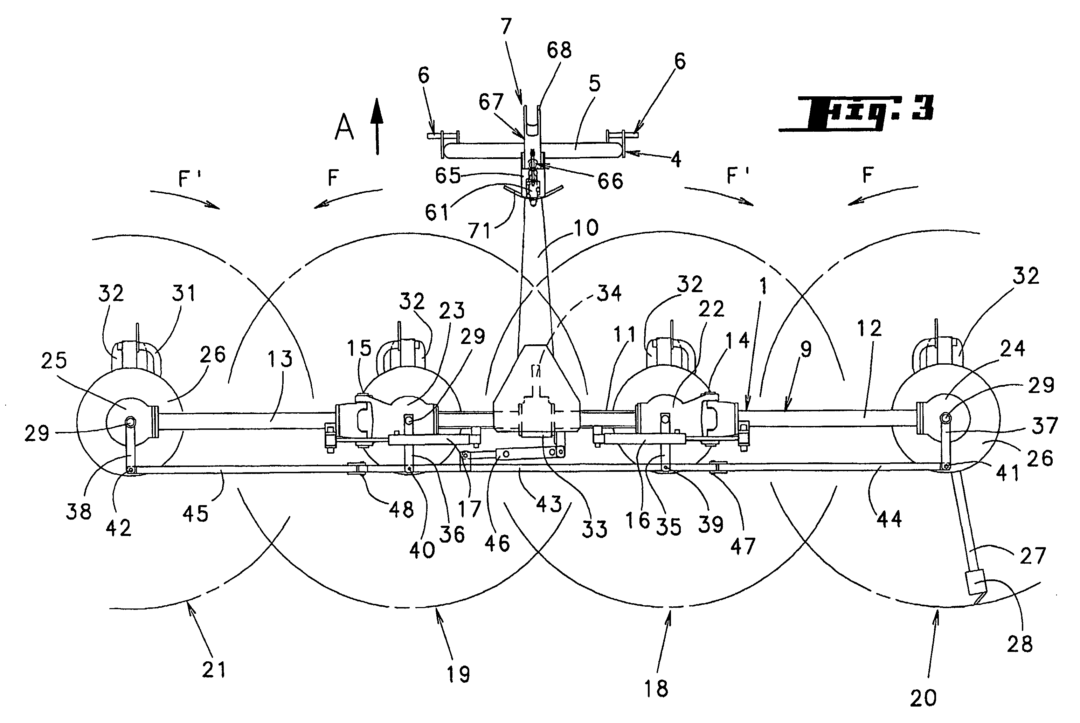

Dans une première position de travail qui est représentée sur la figure 3, la poutre transversale (9) et les rotors (18 à 21) se situent sur une ligne sensiblement perpendiculaire au sens d'avancement (A). Lesdits rotors (18 à 21) projettent les végétaux dans la direction opposée au sens d'avancement (A), de telle sorte qu'ils retombent pratiquement sur la même bande de terrain. Les roues d'appui (32) sont bloquées dans une position dans laquelle elles sont orientées perpendiculairement à la poutre transversale (9). Ce blocage est assuré par le deuxième vérin hydraulique (46) qui immobilise les tiges de commande (43, 44 et 45). Celles-ci bloquent à leur tour, par l'intermédiaire des leviers (35 à 38), les axes supports (29) qui portent les roues (32).

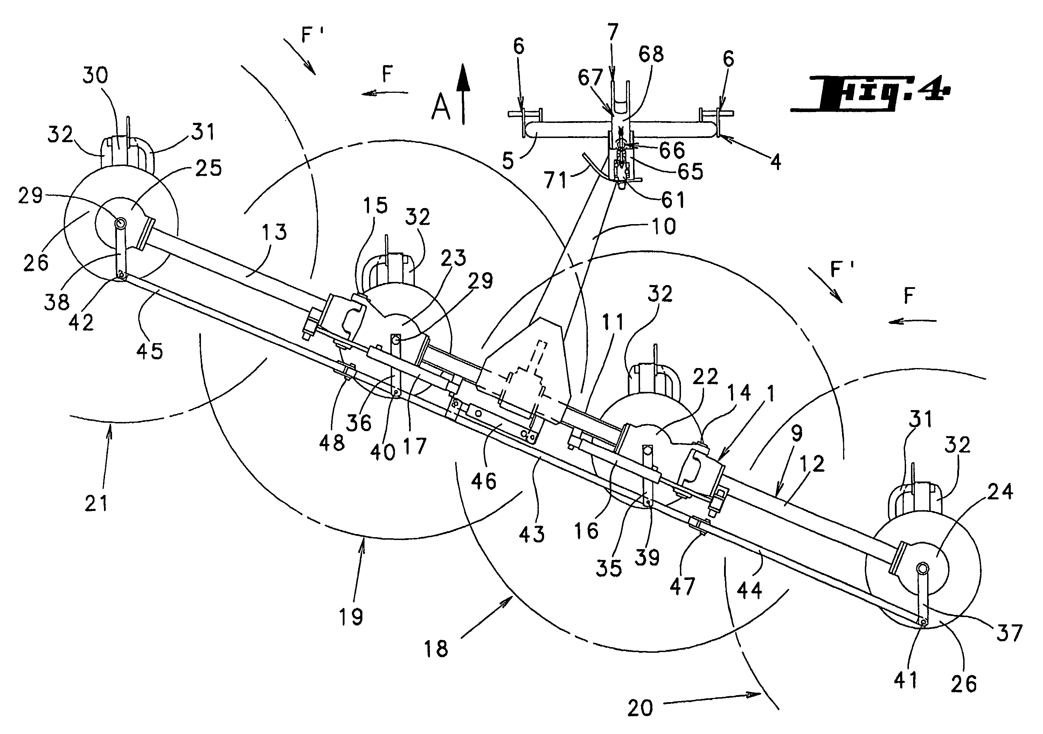

L'utilisateur peut transposer la machine dans une position pour travailler près des bords du terrain. Dans cette position la poutre transversale (9) est oblique par rapport à la direction d'avancement (A). Les rotors (18 à 21) se situent alors sur une ligne oblique et déplacent les végétaux en biais par rapport à la direction d'avancement (A) (voir figure 4). Pour obtenir cette transposition l'utilisateur déplace le tiroir (54) du distributeur (51) du tracteur de telle sorte que la position (C) fasse communiquer le deuxième tuyau (50) avec la pompe (52) et le premier tuyau (49) avec le réservoir (53) du tracteur. L'huile passe ainsi par les tuyaux (50 et 50B) dans la chambre (60) du deuxième vérin hydraulique (46) dont l'autre chambre (57) se vide à travers le premier tuyau (49). Ledit vérin hydraulique (46) déplace alors les tiges de commande (43, 44 et 45) vers le côté droit de la machine. Celles-ci entraînent tous les leviers de réglage (35 à 38) qui font tourner les axes supports (29) sur eux-mêmes. Ces axes (29) orientent les roues d'appui (32) vers le côté gauche de la machine jusqu'à ce qu'elles forment des angles d'environ 25° par rapport à leur position initiale. Comme ces roues d'appui (32) se placent automatiquement dans la direction d'avancement (A) lorsque la machine est déplacée, l'ensemble de la poutre transversale (9) tourne autour de l'axe d'articulation (8) du cadre (5) et prend la position oblique précitée.

Pour revenir dans la première position de travail, il suffit de déplacer le tiroir (54) du distributeur (51) de telle sorte que la position (B) fasse communiquer le tuyau (49) avec la pompe (52) et le tuyau (50) avec le réservoir (53). La direction de déplacement de l'huile est alors inversée de sorte que le deuxième vérin hydraulique (46) fasse tourner les axes supports (29) et les roues d'appui (32) dans leur position initiale. Dans cette position du tiroir (54) du distributeur hydraulique (51), le deuxième vérin hydraulique (46) peut en sus être commandé de sorte qu'il fasse tourner les axes supports (29) et les roues d'appui (32) vers le côté droit de la poutre transversale (9). Cette dernière se place alors au travail dans une position oblique opposée à celle représentée sur la figure 4.

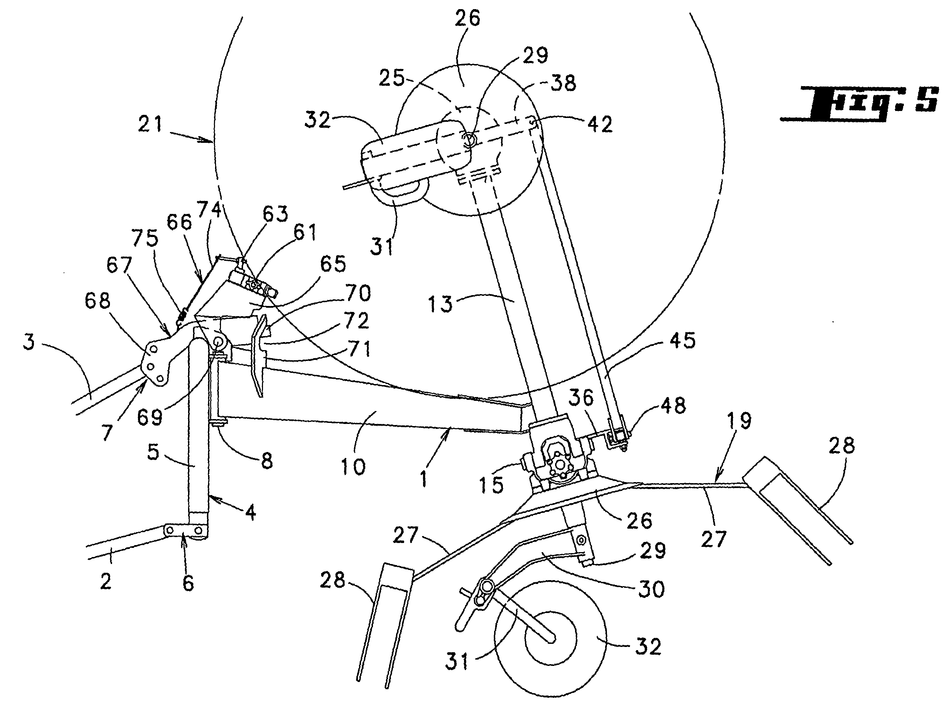

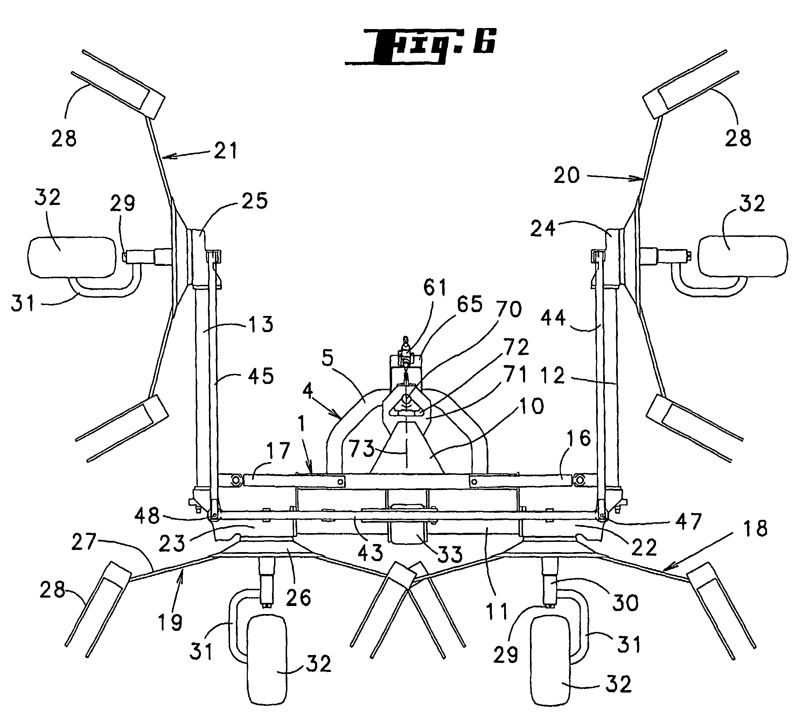

Pour le transport, la machine est mise dans la position représentée sur les figures 5 et 6. Tout d'abord l'utilisateur arrête l'entraînement des rotors (18 à 21) et soulève la machine au moyen des barres de relevage (2 et 3) du tracteur. Simultanément la chape d'attelage (68) est tirée vers le bas, autour de son axe d'articulation (69), par la barre supérieure (3) du tracteur. L'extrémité arrière (70) de la chape (68) se déplace alors vers le haut dans le sommet de la découpe (72) de la pièce de guidage (71). Elle ramène ainsi et bloque la structure porteuse (1) dans l'alignement du tracteur. Ladite chape (68) tire également automatiquement, par l'intermédiaire de la tige (74) et du ressort (75), sur la manette de commande (63). Celle-ci déplace le tiroir (62) du distributeur intermédiaire (61) de sorte que la position (E) fasse communiquer le tuyau (50A) avec le tuyau (50) qui est relié au distributeur (51) du tracteur. Grâce à cette automaticité l'utilisateur n'a pas à s'occuper du réglage du tiroir (62) du distributeur intermédiaire (61). Ensuite, il actionne simplement le tiroir (54) du distributeur (51) du tracteur de telle sorte que la position (C) fasse communiquer le tuyau (50) avec la pompe (52) et le tuyau (49) avec le réservoir (53). L'huile est alors envoyée à travers les tuyaux (50 et 50A) dans les chambres (58 et 59) des premiers vérins hydrauliques (16 et 17). Ceux-ci déplacent les tronçons latéraux (12 et 13) vers le haut autour des axes d'articulation (14 et 15) jusqu'à ce qu'ils occupent des positions sensiblement verticales. Le retour de l'huile des chambres (55 et 56) desdits premiers vérins hydrauliques (16 et 17) s'effectue par le tuyau (49). Dans cette position, la largeur de la machine est considérablement réduite, ce qui favorise les déplacements sur les chemins ou les routes.

Pour revenir en position de travail, l'utilisateur actionne uniquement le tiroir (54) du distributeur (51) du tracteur de telle sorte que la position (B) fasse communiquer le tuyau (49) avec la pompe (52) et le tuyau (50) avec le réservoir (53). L'huile arrive ainsi dans les chambres (55 et 56) des premiers vérins hydrauliques (16 et 17) de sorte que ceux-ci déplacent les tronçons latéraux (12 et 13) vers le bas, autour des axes d'articulation (14 et 15). Lorsque ces tronçons (12 et 13) arrivent dans la position horizontale, l'utilisateur abaisse toute la machine au moyen des barres de relevage (2 et 3) du tracteur et la fait reposer sur les roues d'appui (32) au sol. La chape d'attelage (68) est alors poussée vers le haut par la barre supérieure (3) de sorte que la tige (74) et le ressort (75) relâchent la manette de commande (63) du tiroir (62) du distributeur intermédiaire (61). Celui-ci revient ainsi automatiquement dans la position de travail qui est représentée sur la figure 7 et qui a déjà a été décrite.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini dans les revendications.

## Revendications

1. Machine de fenaison comportant une structure porteuse (1) pouvant être reliée à un tracteur au moyen d'un dispositif d'accouplement (4) constitué par un cadre (5) qui est articulé par rapport à la structure porteuse (1) au moyen d'un axe sensiblement vertical (8) et qui possède deux attaches inférieures (6) et une attache supérieure (7), laquelle structure (1) se compose d'une poutre transversale (9) et d'une poutre de liaison (10) qui relie la poutre transversale (9) au cadre du dispositif d'accouplement (4), ladite poutre transversale (9) étant constituée d'un tronçon central (11) et de tronçons latéraux (12 et 13) qui sont articulés au tronçon central (11) par des axes sensiblement horizontaux (14 et 15) autour desquels ils sont déplaçables à l'aide de premiers vérins hydrauliques (16 et 17), lesquels tronçons (11 à 13) portent des rotors de travail (18 à 21) pouvant être entraînés en rotation autour d'axes supports (29) dirigés vers le bas et portant à leurs extrémités inférieures des roues (32) d'appui au sol qui sont orientables au moyen d'au moins un deuxième vérin hydraulique (46), lesdits premiers vérins hydrauliques (16 et 17) et ledit deuxième vérin hydraulique (46) étant reliés au circuit hydraulique du tracteur au moyen de tuyaux (49 et 50) et commandés à l'aide de distributeurs hydrauliques avec des tiroirs réglables dans plusieurs positions, ***caractérisée par le fait* qu'**un distributeur hydraulique intermédiaire (61) se situe sur un tuyau (50) qui est relié à un distributeur hydraulique (51) du tracteur, que ce distributeur intermédiaire (61) est monté sur un support (65) et qu'il comporte une manette de commande (63) de son tiroir (62) qui est reliée par un moyen de liaison (66) à une pièce (67) du dispositif d'accouplement (4) qui est mobile par rapport audit support (65), de manière à ce que cette pièce mobile (67) règle automatiquement ledit tiroir (62) dans une position où l'huile arrive aux premiers vérins hydrauliques (16 et 17) lorsque la structure porteuse (1) est soulevée et dans une position où l'huile arrive au deuxième vérin hydraulique (46) lorsque la structure porteuse (1) repose sur le sol.

2. Machine selon la revendication 1, ***caractérisée par le fait* que** la pièce mobile (67) à laquelle le moyen de liaison (66) relie la manette de commande (63) du tiroir (62) du distributeur hydraulique intermédiaire (61) est constituée par l'attache supérieure (7) du cadre (5) du dispositif d'accouplement (4).

3. Machine selon la revendication 2, ***caractérisée par le* fait que** l'attache supérieure (7) du cadre (5) est constituée par une chape (68) qui est articulée sur ledit cadre (5) au moyen d'un axe sensiblement horizontal (69).

4. Machine selon la revendication 3, ***caractérisée par le fait* que** la chape (68) possède une extrémité arrière (70) qui se situe dans une pièce de guidage (71) solidaire de la structure porteuse (1).

5. Machine selon la revendication 1, ***caractérisée par le fait* que** la pièce mobile (67) à laquelle le moyen de liaison (66) relie la manette de commande (63) du tiroir (62) du distributeur hydraulique intermédiaire (61) est constituée par le cadre (5) du dispositif d'accouplement (4).

6. Machine selon la revendication 1, ***caractérisée par le fait* que** le support (65) du distributeur hydraulique intermédiaire (61) est solidaire du cadre (5).

7. Machine selon la revendication 1, ***caractérisée par le fait* que** le moyen de liaison (66) est constitué par une tige (74) et un ressort de traction (75).

8. Machine selon l'une quelconque des revendications précédentes, ***caractérisée par le fait* que** des premières chambres (55, 56 et 57) des premiers vérins hydrauliques (16 et 17) et du deuxième vérin hydraulique (46) sont reliées directement au distributeur hydraulique (51) du tracteur au moyen d'un tuyau (49).

9. Machine selon l'une quelconque des revendications précédentes, ***caractérisée par le fait* que** le distributeur hydraulique intermédiaire (61) comporte un tiroir inverseur (62) et qu'il est relié au distributeur (51) du tracteur au moyen d'un deuxième tuyau (50), aux deuxièmes chambres (58 et 59) des premiers vérins hydrauliques (16 et 17) au moyen d'un tuyau (50A) et à la deuxième chambre (60) du deuxième vérin hydraulique (46) par un tuyau (50B).

10. Machine selon la revendication 9, ***caractérisée par le fait* que** le tiroir inverseur (62) est déplaçable dans une première position (D) dans laquelle le passage vers le tuyau (50B) qui est relié à la deuxième chambre (60) du deuxième vérin hydraulique (46) est ouvert et le passage vers le tuyau (50A) qui est relié aux deuxièmes chambres (58 et 59) des premiers vérins hydrauliques (16 et 17) est fermé et dans une deuxième position (E) dans laquelle le passage vers ledit tuyau (50B) qui est relié au deuxième vérin hydraulique (46) est fermé tandis que le passage vers le tuyau (50A) qui est relié aux premiers vérins hydrauliques (16 et 17) est ouvert.

## Patentansprüche

1. Heuwerbungsmaschine mit einem Traggestell (1), das mittels einer Kupplungsvorrichtung (4), die durch einen Rahmen (5) gebildet wird, welcher mittels einer im Wesentlichen vertikalen Achse (8) bezüglich dem Traggestell (1) angelenkt ist und zwei untere Anschlusspunkte (6) und einen oberen Anschlusspunkt (7) aufweist, mit einem Schlepper verbunden werden kann, wobei das Gestell (1) aus einem Querträger (9) und einem Verbindungsträger (10) besteht, der den Querträger (9) mit dem Rahmen der Kupplungsvorrichtung (4) verbindet, wobei der Querträger (9) durch einen mittleren Abschnitt (11) und Seitenabschnitte (12 und 13) gebildet wird, die durch im Wesentlichen horizontale Achsen (14 und 15), um die sie mittels erster Hydraulikzylinder (16 und 17) beweglich sind, am mittleren Abschnitt (11) angelenkt sind, wobei die Abschnitte (11 bis 13) Arbeitsrotoren (18 bis 21) tragen, die um nach unten ausgerichtete Stützachsen (29) drehangetrieben werden können, welche an ihren unteren Enden sich auf dem Boden abstützende Räder (32) tragen, die mittels mindestens eines zweiten Hydraulikzylinders (46) ausgerichtet werden können, wobei die ersten Hydraulikzylinder (16 und 17) und der zweite Hydraulikzylinder (46) mittels Leitungen (49 und 50) mit dem Hydraulikkreis des Schleppers verbunden sind und mit Hilfe hydraulischer Verteiler mit in mehrere Stellungen einstellbaren Schiebern betätigt werden, ***dadurch gekennzeichnet,* dass** sich ein hydraulischer Zwischenverteiler (61) an einer Leitung (50) befindet, die mit einem Hydraulikverteiler (51) des Schleppers verbunden ist, dass dieser Zwischenverteiler (61) an einer Stütze (65) angebracht ist und dass er einen Hebel (63) zur Bedienung seines Schiebers (62) aufweist, der mittels eines Verbindungsmittels (66) mit einem Teil (67) der Kupplungsvorrichtung (4) verbunden ist, das bezüglich der Stütze (65) beweglich ist, so dass dieses bewegliche Teil (67) den Schieber (62) automatisch in eine Stellung einstellt, in der den ersten Hydraulikzylindern (16 und 17) Öl zugeführt wird, wenn das Traggestell (1) angehoben ist, und in eine Stellung, in der dem zweiten Hydraulikzylinder (46) Öl zugeführt wird, wenn das Traggestell (1) auf dem Boden aufliegt.

2. Maschine nach Anspruch 1, ***dadurch gekennzeichnet,* dass** das bewegliche Teil (67), mit dem das Verbindungsmittel (66) den Bedienungshebel (63) des Schiebers (62) des hydraulischen Zwischenverteilers (61) verbindet, durch den oberen Anschlusspunkt (7) des Rahmens (5) der Kupplungsvorrichtung (4) gebildet wird.

3. Maschine nach Anspruch 2, ***dadurch gekennzeichnet,* dass** der obere Anschlusspunkt (7) des Rahmens (5) aus einem Bügel (68) besteht, der mittels einer im Wesentlichen horizontalen Achse (69) am Rahmen (5) angelenkt ist.

4. Maschine nach Anspruch 3, ***dadurch gekennzeichnet,* dass** der Bügel (68) ein hinteres Ende (70) besitzt, das sich in einem fest mit dem Traggestell (1) verbundenen Führungsteil (71) befindet.

5. Maschine nach Anspruch 1, ***dadurch gekennzeichnet,* dass** das bewegliche Teil (67), mit dem das Verbindungsmittel (66) den Bedienungshebel (63) des Schiebers (62) des hydraulischen Zwischenverteilers (61) verbindet, durch den Rahmen (5) der Kupplungsvorrichtung (4) gebildet wird.

6. Maschine nach Anspruch 1, ***dadurch gekennzeichnet,* dass** die Stütze (65) des hydraulischen Zwischenverteilers (61) fest mit dem Rahmen (5) verbunden ist.

7. Maschine nach Anspruch 1, ***dadurch gekennzeichnet,* dass** das Verbindungsmittel (66) aus einer Stange (74) und einer Zugfeder (75) besteht.

8. Maschine nach irgend einem der vorhergehenden Ansprüche, ***dadurch gekennzeichnet,* dass** die ersten Kammern (55, 56 und 57) der ersten Hydraulikzylinder (16 und 17) und des zweiten Hydraulikzylinders (46) mittels einer Leitung (49) direkt mit dem Hydraulikverteiler (51) des Schleppers verbunden sind.

9. Maschine nach irgend einem der vorhergehenden Ansprüche, ***dadurch gekennzeichnet,* dass** der hydraulische Zwischenverteiler (61) einen Umsteuerschieber (62) aufweist und dass er mittels einer zweiten Leitung (50) mit dem Verteiler (51) des Schleppers, mittels einer Leitung (50A) mit den zweiten Kammern (58 und 59) der ersten Hydraulikzylinder (16 und 17) und durch eine Leitung (50B) mit der zweiten Kammer (60) des zweiten Hydraulikzylinders (46) verbunden ist.

10. Maschine nach Anspruch 9, ***dadurch gekennzeichnet,* dass** der Umsteuerschieber (62) in eine erste Stellung (D) verschiebbar ist, in der der Durchgang zur Leitung (50B), die mit der zweiten Kammer (60) des zweiten Hydraulikzylinders (46) verbunden ist, geöffnet und der Durchgang zur Leitung (50A), die mit den zweiten Kammern (58 und 59) der ersten Hydraulikzylinder (16 und 17) verbunden ist, geschlossen ist, sowie in eine zweite Stellung (E), in der der Durchgang zur Leitung (50B), die mit dem zweiten Hydraulikzylinder (46) verbunden ist, geschlossen ist, während der Durchgang zur Leitung (50A), die mit den ersten Hydraulikzylindern (16 und 17) verbunden ist, geöffnet ist.

## Claims

1. Haymaking machine comprising a carrying structure (1) that can be connected to a tractor by means of a coupling device (4) consisting of a frame (5) which is articulated in relation to the carrying structure (1) by means of a substantially vertical shaft (8) and which has two lower attachment points (6) and one upper attachment point (7), which structure (1) comprises a transverse beam (9) and a connecting beam (10) which links the transverse beam (9) to the frame of the coupling device (4), the said transverse beam (9) being made up of a central section (11) and side sections (12 and 13) which are articulated to the central section (11) by substantially horizontal axes (14 and 15) around which they can be moved with the aid of first hydraulic rams (16 and 17), which sections (11 to 13) support working rotors (18 to 21) that can be driven in rotation around support axes (29) directed downwards and supporting at their lower ends land wheels (32) which can be oriented by means of at least one second hydraulic ram (46), the said first hydraulic rams (16 and 17) and the said second hydraulic ram (46) being linked to the tractor's hydraulic circuit by means of pipes (49 and 50) and controlled with the aid of hydraulic distributors with slide valves that can be adjusted into several positions, ***characterized in* that** an intermediate hydraulic distributor (61) is situated on a pipe (50) which is linked to a hydraulic distributor (51) of the tractor, **in that** this intermediate distributor (61) is mounted on a support (65) and **in that** it comprises a control handle (63) for its slide valve (62) which handle is linked by a connecting means (66) to a part (67) of the coupling device (4) which is mobile in relation to the said support (65), in such a manner that this mobile part (67) automatically adjusts the said slide valve (62) into a position in which the oil arrives at the first hydraulic rams (16 and 17) when the carrying structure (1) is raised and into a position in which the oil arrives at the second hydraulic ram (46) when the carrying structure (1) is resting on the ground.

2. Machine according to Claim 1, ***characterized in* that** the mobile part (67) to which the connecting means (66) links the control handle (63) of the slide valve (62) of the intermediate hydraulic distributor (61) consists of the upper attachment point (7) of the frame (5) of the coupling device (4).

3. Machine according to Claim 2, ***characterized in* that** the upper attachment point (7) of the frame (5) consists of a clevis (68) which is articulated on the said frame (5) by means of a substantially horizontal axis (69).

4. Machine according to Claim 3, ***characterized in* that** the clevis (68) has a rear end (70) which is situated in a guide piece (71) integral to the carrying structure (1).

5. Machine according to Claim 1, ***characterized in* that** the mobile part (67) to which the connecting means (66) links the control handle (63) of the slide valve (62) of the intermediate hydraulic distributor (61) consists of the frame (5) of the coupling device (4).

6. Machine according to Claim 1, ***characterized in* that** the support (65) of the intermediate hydraulic distributor (61) is integral to the frame (5).

7. Machine according to Claim 1, ***characterized in* that** the connecting means (66) consists of a rod (74) and a draw spring (75).

8. Machine according to any one of the previous claims, ***characterized in* that** first chambers (55, 56 and 57) of the first hydraulic rams (16 and 17) and of the second hydraulic ram (46) are directly linked to the hydraulic distributor (51) of the tractor by means of a pipe (49).

9. Machine according to any one of the previous claims, ***characterized in* that** the intermediate hydraulic distributor (61) comprises an inverter slide valve (62) and **in that** it is linked to the distributor (51) of the tractor by means of a second pipe (50), to the second chambers (58 and 59) of the first hydraulic rams (16 and 17) by means of a pipe (50A) and to the second chamber (60) of the second hydraulic ram (46) by a pipe (50B).

10. Machine according to Claim 9, ***characterized in* that** the inverter slide valve (62) can be moved into a first position (D) in which the passage to the pipe (50B) which is linked to the second chamber (60) of the second hydraulic ram (46) is open and the passage to the pipe (50A) which is linked to the second chambers (58 and 59) of the first hydraulic rams (16 and 17) is closed and into a second position (E) in which the passage to the said pipe (50B) which is linked to the second hydraulic ram (46) is closed whereas the passage to the pipe (50A) which is linked to the first hydraulic rams (16 and 17) is open.
